# FASCICULE DE BREVET EUROPEEN

(11) **EP 0 347 301 B1**
(45) Date de publication et mention de la délivrance du brevet: **13.01.1993**
(21) Numéro de dépôt: 89401628.6
(22) Date de dépôt: 12.06.1989
(51) Int. Cl.: G05G 3/00

(54) **Fourchette de boîte de vitesses en alliage cuivreux avec cran de crabot intégré**
Schaltgabel für Wechselgetriebe aus Kupferlegierung mit integriertem Schalteinschnitt
Gear shift fork made of a copper alloy having an integrated shifter catch

(30) Priorité: 15.06.1988 FR 8808020
(43) Date de publication de la demande: 20.12.1989
(73) Titulaire: FAVI, F-80490 Hallencourt (FR)
(72) Inventeur: Martin, Dominique, F-80710 Namps-au-Mont (FR)
(74) Mandataire: Casalonga, Axel

(56) Documents cités:
- FR-A- 1 350 298
- FR-A- 1 561 563
- FR-A- 2 105 200
- US-A- 3 257 861
- PATENT ABSTRACTS OF JAPAN, vol. 4, no. 100 (P-019)[582], 18 juillet 1980; & JP-A-55 57 925 (NISSAN MOTOR CO. LTD) 24-10-1978
- PATENT ABSTRACTS OF JAPAN, vol. 8, no. 248 (P-313)[1685], 14 novembre 1984; & JP-A-59 121 414 (TOYOTA JIDOSHA K.K.) 27-12-1982

## Description

L'invention concerne les fourchettes de boîtes de vitesses des véhicules.

On appelle fouchette de boîte de vitesses une pièce en forme de fourche comportant deux doigts de guidage qui viennent se loger dans des points diamétralement opposés d'une gorge de révolution portée par un pignon ou plus généralement par un manchon de crabotage coaxial à l'arbre primaire ou secondaire de la boîte.

La fourchette, dans son ensemble, est déplaçable en translation parallèlement à cet arbre en étant montée solidaire d'une tige coulissante, ou plus généralement en étant elle-même coulissante sur une tige fixe de la boîte. Pour commander ce mouvement de translation, qui préside au passage des vitesses, on utilise généralement un doigt de crabotage qui comporte une extrémité avec deux portées sphériques ou cylindriques qui s'inscrivent entre les deux faces parallèles en regard d'une encoche ou cran de crabotage pratiqué dans une pièce qui peut être solidaire de la tige, mais qui est le plus souvent solidaire de la fourchette pour simplifier la construction.

Une telle fourchette doit satisfaire à la fois à trois exigences très diffèrentes : en premier lieu, une bonne résistance mécanique, en particulier à la flexion, pour résister au moment de flexion dû à l'écart transversal important entre les points d'action des doigts de guidage et les points d'action du doigt de crabotage; en second lieu, un faible coefficient de frottement et une bonne résistance à l'usure des doigts de guidage qui glissent en permanence à l'intérieur de la gorge du manchon de crabotage afin de transmettre à celui-ci les mouvements de translation, tout en permettant son mouvement de rotation; enfin, les deux faces en regard du cran de crabotage doivent avoir une dureté suffisante pour résister à la pression importante occasionnée par le contact quasiment ponctuel de l'extrémité du doigt de crabotage.

Il est très diffile, dans la pratique, de satisfaire à la fois à ces trois exigences dans des conditions économiques.

Pendant longtemps, les fourchettes de boîtes de vitesses étaient réalisées en fonte, ce qui permet de bien résoudre les problèmes de résistance mécanique et de dureté, mais non les problèmes de coefficient de frottement et de résistance à l'usure. Pour cela, les faces de portées des doigts de guidage doivent être traitées au molybdène, ce qui est une opération onéreuse venant sensiblement doubler le prix de la pièce.

Par le document JP-A-55057925 publié dans Patent Abstracts of Japan, on connait une fourchette de boîte de vitesses avec cran de crabot intégré dans laquelle les faces en regard du cran de crabot sont protégées par une pièce en U réalisée en résine à base de polyamide ou en un métal à haute résistance.

La tendance actuelle est de réaliser ces fourchettes de boîtes de vitesses en alliage cuivreux, notamment en alliage de laiton injecté sous pression, ce qui permet d'obtenir économiquement des pièces propres, légères et précises, et satisfait pleinement les conditions de résistance mécanique et de résistance à l'usure, le couple laiton/acier bénéficiant d'un très faible coefficient de frottement. Par contre, avec ce matériau, ce sont les problèmes de dureté qui sont les plus difficiles à résoudre. Pour cela, on est le plus souvent obligé de prévoir le cran de crabotage dans une pièce en acier, elle-même fixée sur la fourchette, par exemple par un rivetage, ce qui non seulement augmente le coût de la pièce, mais pose des problèmes supplémentaires liés à la jonction de deux matériaux différents.

Le but de l'invention est d'éliminer les inconvénients précédents en réalisant une fourchette de boîte de vitesses avec cran de crabot intégré qui satisfasse à la fois toutes les exigences ci-dessus, et qui en même temps soit extrêmement économique et robuste.

L'invention consiste à réaliser entièrement la fourchette en alliage cuivreux injecté, y compris la paroi comportant le cran de crabot qui fait corps avec elle, et à protéger les deux faces en regard du cran de crabot coopérant avec le doigt de crabotage à l'aide d'un clip en tôle d'acier à ressort (tôle bleue), d'une forme appropriée pour revêtir les trois faces de la forme en U du cran de crabot, ainsi qu'une partie au moins des deux faces des deux parties de paroi situées de part et d'autre du cran de crabot.

Le clip de protection a donc sensiblement une forme en U dont les deux ailes ont elles-mêmes une section en U avec des ailes tournées vers l'extérieur, et le premier U présente une forme légèrement ouverte, pour s'insérer dans le cran de crabot par déformation élastique, tandis que les deux U latéraux ont une forme légèrement fermée pour pincer par déformation élastique les deux parties de paroi.

Cette disposition élimine les problèmes de tolérance de fabrication et de déformations à la trempe.

En plus des frottements produits par cette ouverture et ces pincements, le clip est en outre maintenu en place par des moyens de verrouillage mécaniques agencés pour une mise en place rapide et automatisable dans le cran de crabot tout en restant indémontable.

D'autres particularités de l'invention apparaîtront dans la description qui va suivre de divers modes de réalisation pris comme exemples et représentés sur le dessin annexé, sur lequel :
la figure 1 est une vue en perspective éclatée de l'ensemble de la fourchette et du doigt de crabotage;
la figure 2 est une vue éclatée à plus grande échelle montrant le détail du cran de crabotage et de son clip de renforcement;
la figure 3 est une vue de détail en perspective d'un premier mode de réalisation;
la figure 4 est une vue partielle en élévation de ce premier mode de réalisation;
les figures 5 et 6 sont des vues analogues aux figures 3 et 4 dans un deuxième mode de réalisation;
la figure 7 est une vue en perspective d'un troisième mode de réalisation;
la figure 8 est une vue de profil de ce même mode de réalisation;
les figures 9 et 10 sont des vues correspondant aux figures 7 et 8 dans un quatrième mode de réalisation;
les figures 11 et 12 sont des vues correspondant aux figures 7 et 8 d'un cinquième mode de réalisation;
la figure 13 est une vue en perspective d'un sixième mode de réalisation;
la figure 14 représente une vue partielle en bout de la figure 13; et
la figure 15 représente en perspective un septième mode de réalisation.

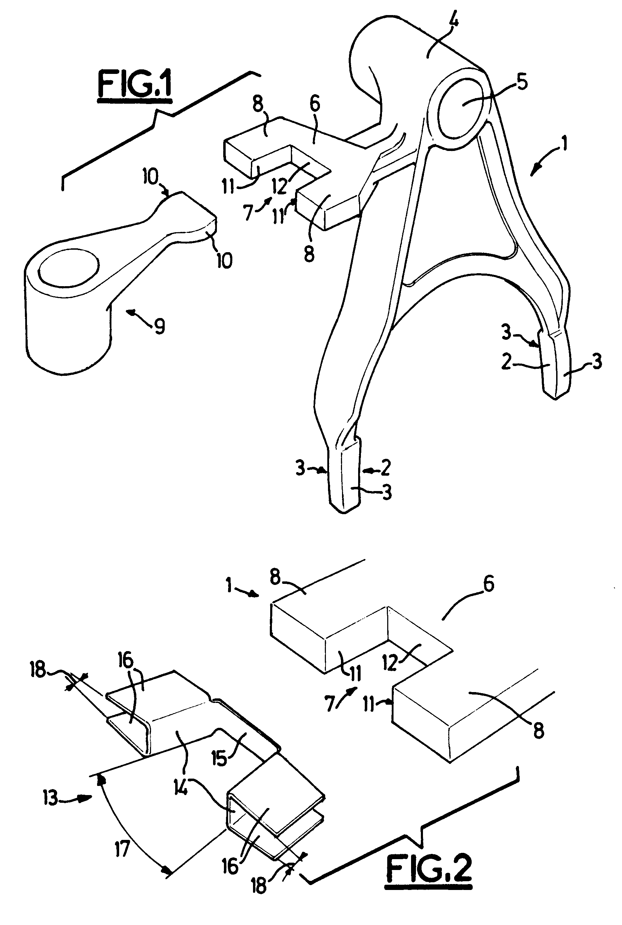

On voit sur la figure 1 la fourchette de boîte de vitesses 1 dans son ensemble avec les doigts de guidage 2, destinée à venir s'insérer dans la gorge du manchon de crabotage correspondant, non représenté, de manière que les deux portées planes 3 de chaque doigt de guidage 2 viennent porter contre les flancs de cette gorge afin d'assurer la transmission des mouvements de translation lors de l'engagement de l'une ou l'autre des deux vitesses commandées par ce manchon de crabotage.

On voit, d'autre part, le canon supérieur 4 dont l'alésage central 5 se monte sur la tige de guidage non représentée, pour coulisser sur cette tige ou avec elle selon le cas, de manière à guider avec précision le mouvement de translation parallèle à l'arbre de la boîte de vitesses portant le manchon de crabotage.

On voit également la paroi 6 portant le cran de crabotage 7, avec les deux parties de paroi 8 subsistant de part et d'autre de ce cran 7.

On voit également sur la figure 1 le doigt de crabotage 9 dont l'extrémité comporte deux portées 10 sphériques ou cylindriques venant s'inscrire entre les deux faces parallèles en regard 11 de la forme en U du cran de crabotage 7, de part et d'autre du fond 12. Ce doigt de crabotage 9 est représenté écarté du cran de crabotage 7 pour plus de clarté, mais naturellement lors du fonctionnement, il se trouve engagé par son extrémité dans ce cran de crabotage, ou à proximité immédiate selon le mouvement de sélection des fourchettes.

On voit en particulier sur la figure que, par rapport à la surface de guidage 5, le point d'action de la force produite par le doigt de crabotage 9 sur l'une ou l'autre des surfaces 11, est très éloigné dans le sens transversal à l'axe de translation des portées 3 transmettant cet effort au manchon de crabotage.

La fourchette 1 doit donc, avant tout, avoir une résistance mécanique suffisante pour résister à toutes les contraintes subies, en particulier au moment de flexion produit par l'écartement de ces forces fonctionnelles.

Par ailleurs, les portées 3 doivent glisser avec le minimum de frottement, et surtout le minimum d'usure à l'intérieur de la gorge du manchon de crabotage.

Enfin, les surfaces 11 du cran de crabotage 7 doivent avoir une dureté suffisante pour résister au contact quasiment ponctuel des portées 10 du doigt de crabotage 9.

Pour satisfaire à ces trois exigences, conformément à l'invention, on réalise l'ensemble de la fourchette 1, y compris les parois 6 et 8, en une seule pièce en alliage cuivreux injecté sous pression, ce qui permet de satisfaire déjà les deux premières conditions, puis on vient insérer dans le cran de crabotage un clip 13, illustré sur la figure 2, afin de satisfaire à la troisième condition.

Ce clip 13 est réalisé en tôle d'acier à ressort (tôle bleue), pour avoir une grande dureté et un faible coût. Il comporte naturellement des faces planes en regard 14, destinées à doubler les faces en regard 11 du cran de crobatage 7, puisque c'est l'essentiel de sa fonction. Mais il comporte également une partie 15 destinée à réunir les deux parties 14 afin de ne constituer qu'une seule pièce, et également quatre ailes latérales 16 destinées à recouvrir au moins partiellement les deux faces de chacune des parties de paroi 8.

Etant donné les difficultés à réaliser des angles de pliage précis dans une pièce en tôle mince, surtout après les inévitables déformations de trempe, on donne à la section en U 14-15-14 un angle d'ouverture 17, par exemple de 15 à 20°, alors qu'au contraire, on donne aux deux sections en U latérales 16-14-16 un angle de pincement 18, également de l'ordre de 15 à 20°.

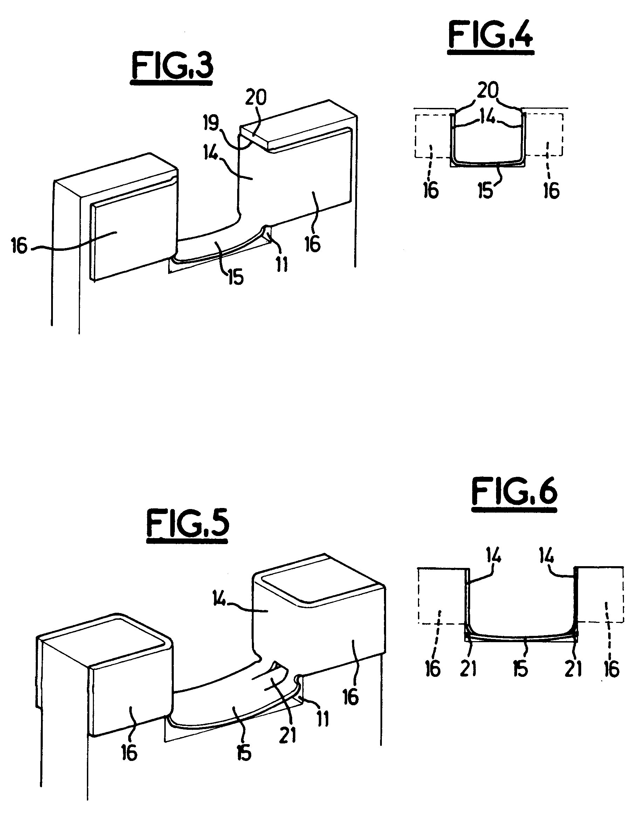

De cette manière, l'introduction en place du clip dans le cran de crabot et sur les parties de paroi 8, nécessite une déformation élastique de celui-ci, ce qui permet un bon emboîtement avec serrage, et une géométrie exacte de la pièce une fois mise en place. Lors de cette mise en place, la partie 15 qui est initialement sensiblement plane, se courbe légèrement en arc, comme représenté sur la figure 3.

De par sa constitution, la pièce 13 tient déjà en place par les frottements produits sur la fourchette.

Toutefois, comme cela n'est pas suffisant, on complète le montage par un moyen de retenue en place. Tous les moyens de retenue usuels pourraient être utilisés, tels que collage, rivetage ou autres.

Cependant, en vue d'une mise en place rapide et automatisable, on utilise de préférence un moyen de retenue mécanique agissant automatiquement du seul fait de la mise en place.

Les exemples qui suivent donnent diverses solutions à un tel verrouillage mécanique automatique.

Dans le mode de réalisation des figures 3 et 4, on utilise l'élasticité de la partie 15 courbée en arc pour assurer le verrouillage par le bord extérieur 19 des parties 14 venant coopérer avec un redan 20 à l'extrémité des faces latérales 11.

Ce mode de réalisation est simple et efficace, mais on peut craindre qu'une action de frottement du doigt de crabotage 9 sur les faces 16 risque de décrocher le clip 13.

Dans le mode de réalisation des figures 5 et 6, on découpe de chaque côté des extrémités de la partie 15, et sur une partie de la largeur de celle-ci, des languettes 21 qui viennent s'arc-bouter entre les deux faces parallèles 11 d'une manière irréversible s'opposant au démontage, même en cas de flexion partielle des parties 14 sous l'effet des frottements appliqués sur les ailes 16. Toutefois, ce mouvement élastique demeure possible.

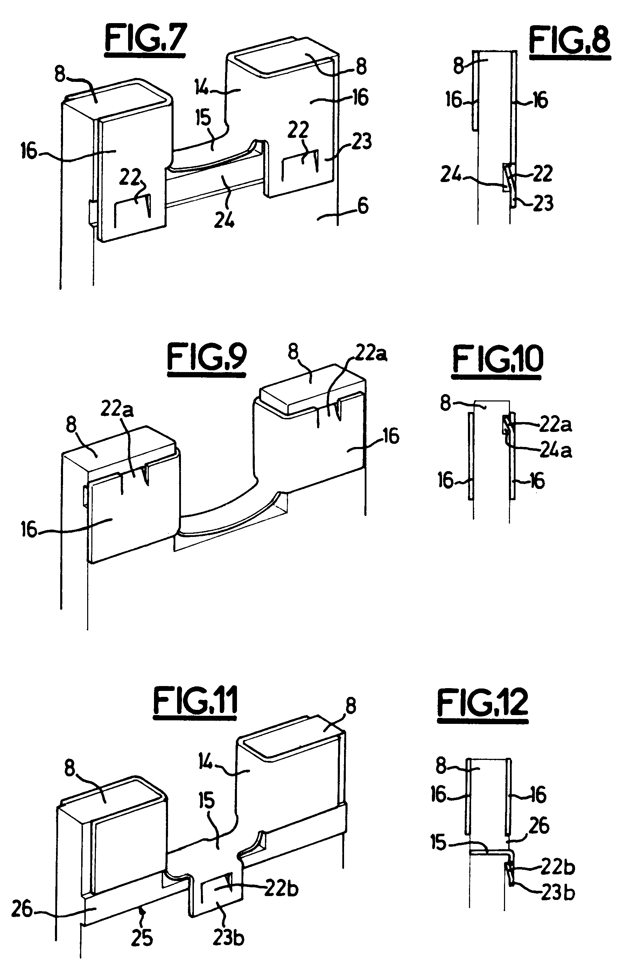

Dans le mode de réalisation des figures 7 et 8, on découpe des languettes 22 dans la base prolongée 23 d'une au moins des faces 16 de chaque côté du cran 7, ces languettes étant infléchies vers l'intérieur et coopérant avec une rainure de verrouillage 24 taillée dans la paroi 6 à la base des parties 8. Le verrouillage produit empêche non seulement la sortie du clip par translation dans le sens de l'axe du cran de crabot 7, mais également le basculement des parties 14 et 16 vers l'intérieur du cran de crabot.

Les figures 9 et 10 représentent une variante de la solution précédente, dans laquelle les languettes 22a sont découpées à la partie supérieure des ailes 16 pour coopérer chacune avec une rainure 24a pratiquée vers l'extrémité des parties 8, avec le même effet que la solution précédente.

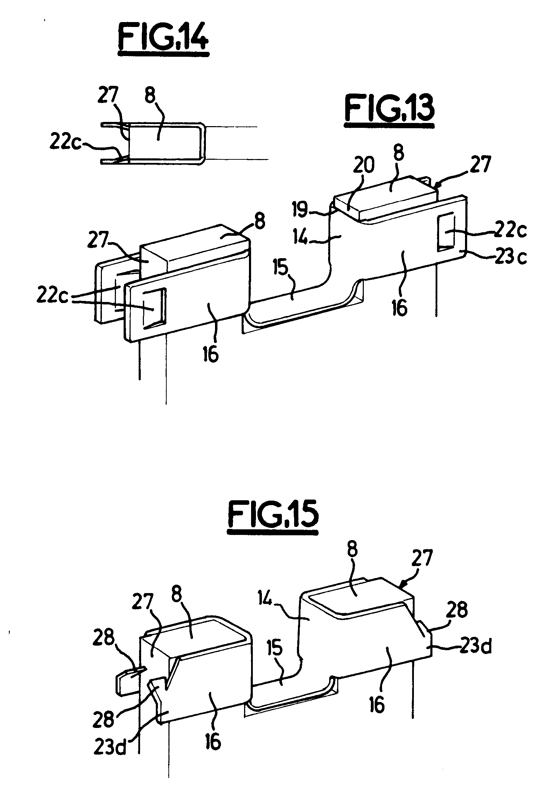

Les figures 11 et 12 illustrent une variante de réalisation des figures 7 et 8, dans laquelle les languettes 22b sont découpées dans une partie 23b repliée à partir de la partie centrale 15 et coopérant avec le dessous 25 d'une nervure 26 subsistant à la base des parties 8.

Dans le mode de réalisation des figures 13 et 14, des languettes 22c sont découpées dans des parties 23c prolongeant les ailes 16 vers l'extérieur, de manière à coopérer avec les faces externes 27 des parois 8. Cette solution évite positivement le basculement des parties 14, mais comme la résistance à l'extraction dans le sens de l'axe du cran de crabot 7 est moins bien assurée, on la complète de préférence à l'aide de redans 20 coopérant avec les bords 19 comme dans le cas des figures 3 et 4.

Enfin, dans le mode de réalisation de la figure 15, on découpe, toujours dans des prolongements 23d des faces 16 vers l'extérieur, des pattes 28 infléchies en forme de pointe, pour assurer tout à la fois, non seulement la retenue mécanique contre le basculement des faces 14 vers l'intérieur, mais également la retenue contre l'arrachement axial par engagement dans les faces 27.

On voit que, dans tous les cas, le simple engagement du clip 13 correspondant dans le cran de crabotage suffit à assurer la fixation automatique du clip, qui demeure par la suite indémontable, sauf utilisation d'un outillage spécial.

D'autre part, la grande souplesse du clip et de ses divers moyens de fixation assure, dans tous les cas, de ne créer aucun problème lié à la nature différente des matériaux, en particulier aucun problème de dilatation différentielle.

## Revendications

1. Fourchette (1) de boîte de vitesses avec cran de crabot (7) intégré, les faces en regard (11) du cran de crabot étant protégées par une pièce en U, caractérisée par le fait que l'ensemble de la fourchette (1) et des parois (6,8) portant le cran de crabot (7) est réalisé en une seule pièce en alliage cuivreux moulé par injection, et que la pièce en U est constituée par un unique clip (13) en tôle mince d'acier à ressort, dont les deux ailes latérales (14) ont elles-mêmes une section en U avec leurs ailes (16) tournées vers l'extérieur, pour recouvrir eu moins partiellement les parties de paroi (8) entourant le cran de crabotage (7), le clip étant immobilisé en position par tout moyen mécanique de fixation approprié.

2. Fourchette selon la revendication 1, caractérisée par le fait que la section centrale en U présente une ouverture (17) de 15 à 20°, tandis que les sections latérales en U (16-14-16) présentent un pincement (18) de 15 à 20°.

3. Fourchette selon la revendication 2, caractérisée par le fait que le moyen de fixation du clip (13) dans le cran de crabotage (7) est constitué par des moyens mécaniques mettant à profit la flexibilité et la dureté du matériau dont est fait le clip, pour assurer un verrouillage automatique par simple mise en place.

4. Fourchette selon la revendication 3, caractérisée par le fait que le verrouillage est assuré par la coopération du bord extérieur (19) de la section centrale en U (14-15-14) avec un redan (20) situé au bord extérieur correspondant de la face latérale (11) du cran de crabotage (7).

5. Fourchette selon la revendication 3, caractérisée par le fait que le moyen de verrouillage est constitué par des languettes (21) découpées dans la partie centrale (15) du clip, aux extrémités de celle-ci et sur une partie seulement de sa largeur, afin de s'arc-bouter entre les faces planes en regard (11) du cran de crabotage (7).

6. Fourchette selon la revendication 3, caractérisée par le fait que le moyen de verrouillage est constitué par des languettes (22a,22,22b) découpées dans les ailes (16), dans leur prolongement (23) ou dans un prolongement latéral (23b) de la partie centrale (15) et infléchies pour coopérer avec des rainures (24,24a) ou nervures (26) de la fourchette.

7. Fourchette selon une des revendications 3 et 4, caractérisée par le fait que les moyens de verrouillage incluent des languettes (22c) découpées dans des prolongements (23c) des ailes (16) vers l'extérieur et infléchies de manière à coopérer avec les faces extérieures (27) des parties de paroi latérales (8), de part et d'autre du cran de crabotage (7).

8. Fourchette selon la revendication 3, caractérisée par le fait que les moyens de verrouillage sont constitués par des pattes acérées (28) découpées dans des prolongements (23d) des ailes (16) vers l'extérieur et venant appuyer et s'engager dans les faces extérieures (27) des parties de paroi (8) entourant le cran de crabotage (7).

## Patentansprüche

1. Schaltgabel für Wechselgetriebe mit integriertem Schalteinschnitt (7), wobei die einander gegenüberliegenden Seiten (11) des Schalteinschnitts durch ein U-förmiges Teil geschützt sind,
dadurch gekennzeichnet,
daß die aus Schaltgabel (1) und den den Schalteinschnitt (7) tragenden Wandungen bestehende Einheit als Spritzgußteil aus einer Kupferlegierung hergestellt ist,
und daß das U-förmige Teil aus einer einzigen Klammer (13) aus dünnem Federstahlblech besteht, deren beiden Seitenschenkel (14) ihrerseits U-förmigen Querschnitt haben und mit ihren Schenkeln nach außen weisen, um die Teile der Wandung (8), die den Schalteinschnitt (7) umschließen, zumindest teilweise zu überdecken, wobei die Klammer (13) durch irgendein geeignetes mechanisches Befestigungsmittel in ihrer Position festgelegt ist.

2. Schaltgabel nach Anspruch 1, dadurch gekennzeichnet, daß der zentrale U-förmige Querschnitt einen Öffnungswinkel (17) von 15° bis 20° hat, während die U-förmigen seitlichen Querschnitte (16-14-16) sich unter einem Winkel von 15° bis 20° verengen.

3. Schaltgabel nach Anspruch 2, dadurch gekennzeichnet, daß das Befestigungsmittel zur Festlegung der Klammer (13) in dem Schalteinschnitt (7) aus mechanischen Mitteln besteht, die unter Ausnutzung der Flexibilität und der Härte des zur Hertellung der Klammer (13) verwendeten Materials ein automatisches Verriegeln durch einfaches Einsetzen sicherstellen.

4. Schaltgabel nach Anspruch 3, dadurch gekennzeichnet, daß die Verriegelung durch das Zusammenwirken des äußeren Randes (19) des zentralen U-förmigen Querschnitts (14-15-14) mit einer Stufe (20) gesichert ist, die sich an dem entsprechenden äußeren Rand der Seitenfläche (11) des Schalteinschnitts (7) befindet.

5. Schaltgabel nach Anspruch 3, dadurch gekennzeichnet, daß das Verriegelungsmittel aus Zungen (21) besteht, die in dem zentralen Teil der Klammer in dessen Endbereichen und nur in einem Teil seiner Breite in der Weise ausgeschnitten sind, daß sie sich zwischen den einander gegenüberliegenden ebene Seiten des Schalteinschnitts (7) verspreizen.

6. Schaltgabel nach Anspruch 3, dadurch gekennzeichnet, daß das Verriegelungsmittel aus Zungen (22a, 22, 22b) besteht, die in den Schenkeln (16) oder in deren Verlängerung (23) oder in einer seitlichen Verlängerung (23b) des zentralen Teils (15) ausgeschnitten und so gebogen sind, daß sie mit Nuten (24, 24a) oder Rippen (26) der Schaltgabel zusammenwirken können.

7. Schaltgabel nach Anspruch 3 und 4, dadurch gekennzeichnet, daß die Verriegelungsmittel Zungen (22c) umfassen, die in Verlängerungen (23c) der Schenkel (16) nach außen ausgeschnitten und so gebogen sind, daß sie zu beiden Seiten des Schalteinschnitts (7) mit den Außenseiten (27) der seitlichen Teile der Wandung (8) zusammenwirken.

8. Schaltgabel nach Anspruch 3, dadurch gekennzeichnet, daß die Verriegelungsmittel aus scharfkantigen Lappen (28) bestehen, die in Verlängerungen (23d) der Schenkel (16) nach außen ausgeschnitten sind und sich an den Außenseiten (27) der den Schalteinschnitt (7) umschließenden Teilen der Wandung (8) abstützen und dort zum Eingriff kommen.

## Claims

1. Gearshift fork (1) having an integral dog notch (7), the opposite faces (11) of the dog notch being protected by a U-shaped piece, characterised by the fact that the assembly comprising the fork (1) and the walls (6, 8) carrying the dog notch (7) is made in one piece of diecast copper base alloy, and that the U-shaped piece consists of a single clip (13) of thin spring steel sheet, whose two lateral flanges (14) in turn have a U-shaped section with their flanges (16) facing outwards, in order to cover at least partly the wall portions (8) surrounding the dog notch (7), the clip being locked in position by any appropriate mechanical fastening means.

2. Fork according to Claim 1, characterised by the fact that the central U-shaped section has a divergence (17) of 15 to 20°, while the lateral U-shaped sections (16-14-16) have a convergence (18) of 15 to 20°.

3. Fork according to Claim 2, characterised by the fact that the means fastening the clip (13) in the dog notch (7) consists of mechanical means taking advantage of the flexibility and hardness of the material of which the clip is made to achieve automatic locking through simply being placed in position.

4. Fork according to Claim 3, characterised by the fact that locking is effected by cooperation between the outer edge (19) of the central U-shaped section (14-15-14) with a step (20) situated at the corresponding outer edge of the side face (11) of the dog notch (7).

5. Fork according to Claim 3, characterised by the fact that the locking means consists of tongues (21) cut out from the central portion (15) of the clip, at the ends of said central portion and over only a part of its width, in order to be braced against the opposite plane faces (11) of the dog notch (7).

6. Fork according to Claim 3, characterised by the fact that the locking means consists of tongues (22a, 22, 22b) cut out from the flanges (16), from extensions (23) of the latter, or from a lateral extension (23b) of the central portion (15), and bent inwards to cooperate with slots (24, 24a) or ribs (26) on the fork.

7. Fork according to one of Claims 3 and 4, characterised by the fact that the locking means include tongues (22c) cut out from outwardly directed extensions (23c) of the flanges (16) and bent inwards so as to cooperate with the outer faces (27) of the lateral wall portions (8) on each side of the dog notch (7).

8. Fork according to Claim 3, characterised by the fact that the locking means consist of pointed tabs (28) cut out from outwardly directed extensions (23d) of the flanges (16) and brought to bear against and to engage in the outer faces (27) of the wall portions (8) surrounding the dog notch (7).
